# EUROPEAN PATENT SPECIFICATION

(11) **EP 0 800 261 B1**
(45) Date of publication and mention of the grant of the patent: **20.09.2000**
(21) Application number: 97105198.2
(22) Date of filing: 27.03.1997
(51) Int. Cl.: H02P 3/04, A01D 34/76, F16D 67/02

(54) **Braking system**
Bremssystem
Système de freinage

(30) Priority: 04.04.1996 SE 9601304
(43) Date of publication of application: 08.10.1997
(73) Proprietor: FHP ELMOTOR AKTIEBOLAG, S-590 90 Ankarsrum (SE)
(72) Inventor: Lahti, Erkki, 577 36 Hultsfred (SE)
(74) Representative: Andersson, Per-Olof

(56) References cited:
- EP-A- 0 503 273
- EP-A- 0 505 703
- DE-A- 2 843 503
- DE-C- 3 039 266
- DE-C- 3 828 954
- GB-A- 2 130 466
- US-A- 4 351 424
- US-A- 4 377 224
- US-A- 4 513 848

## Description

The present invention relates to a braking system for an electric motor, which is adapted to drive, in a given direction of rotation, a rotatable motor shaft, which projects through a bearing plate of the motor in order to drive a unit, such as a cutting unit in a lawn mower, said system comprising a stationary brake element, which is non-rotatable relative to the bearing plate, a rotatable brake element, which is rotatably and displaceably mounted on the motor shaft, a driver which is non-rotatably mounted on the motor shaft between the bearing plate and the rotatable brake element for driving thereof, a resilient means, which is adapted to axially urge the rotatable brake element towards the stationary brake element, a first ramp means, which is fixedly mounted on the driver on the side facing the rotatable brake element, a second ramp means, which is fixedly mounted on the rotatable brake element on the side facing the driver, the two ramp means being adapted to axially urge, when the electric motor drives the motor shaft in said direction of rotation, the rotatable brake element in a direction away from the stationary brake element, and a unit part, which is adapted to be driven by the motor shaft via the driver and the rotatable brake element.

Braking systems of the above-mentioned type are previously known (e.g. US-A-4,377,224) and are used especially in powered rotary lawn mowers, in which the rotor for reasons of safety is to be quick-stopped when switching off the motor. Owing to the relatively inconvenient environment, in which these braking systems must operate, they must, apart from being of robust design, be little sensitive to soiling and easy to maintain. In these respects, the prior-art braking systems suffer from obvious deficiencies, and an object of the present invention is to eliminate these deficiencies.

A further object of the invention is to provide a braking system which is considerably less expensive to manufacture than the often very complicated braking systems that have been known up to now.

These objects are achieved by a braking system which is of the type mentioned by way of introduction and which is characterised in that the driver is a substantially circular disc, which has a central hub attached to the motor shaft, and a plurality of recesses distributed along the circumference of the disc and each extending over a certain part of the circumference, that the stationary brake element projects radially outside the disc, and that the rotatable brake element is a substantially circular brake disc, which has a central hub surrounding the motor shaft and has, for the purpose of being driven by means of the recesses of the driving disc, a plurality of projections, which project axially towards the driving disc and which extend over a smaller distance in the circumferential direction than the recesses of the driving disc, the projections engaging with the recesses with play, the resilient means being adapted to urge, when the electric motor ceases to drive the motor shaft in said direction of rotation, the brake disc axially in the direction of the stationary brake element for braking the unit.

By forming both the driver and the rotatable brake element as separate discs having engaging portions (the recesses of the driving disc and the projections of the brake disc) which are arranged far away from the centre of the discs and, consequently, are subjected to small loads, it is possible to select materials for the discs which are inexpensive to buy and easy to work, thereby reducing the manufacturing costs for the braking system significantly. Besides, the braking system is very easy to mount since the components included therein can be so designed that, during mounting, they are successively pushed on to the motor shaft.

According to a preferred embodiment of the invention, the driving disc and the brake disc are made of metal sheet, and the recesses and the projections are made by punching the metal sheet. Metal sheet is a very inexpensive material which is also very easy to work. Thus, the costs of this embodiment are reduced to an absolute minimum, especially if the above-mentioned ramp means are also made from the metal sheet by punching.

According to a preferred embodiment, at least one of the ramp means, however, is a ring made of plastic, which on its one side has pins for engaging with corresponding apertures in the driving disc and the brake disc, respectively, and on its other side has uniformly distributed ramp surfaces. The fact that this embodiment is preferred is easy to understand, bearing in mind that it permits use of comparatively tough and durable plastic materials for the ramp means.

The resilient means used is preferably a helical spring which encloses the motor shaft, and the hub of the brake disc preferably has an axial abutment bore with a narrow portion for the motor shaft and a wide portion for the helical spring. This means that the helical spring is easy to mount and is protected by the surrounding hub from contact with the environment.

A tubular bush is suitably arranged between the motor shaft and the narrow portion of the bore, the bush having a radially projecting collar, which is arranged between the helical spring and the abutment of the bore. The purpose of the tubular bush, which preferably is made of plastic, is to reduce the friction between on the one hand the motor shaft and the helical spring and, on the other hand, the hub of the brake disc.

The motor shaft has at its free end preferably a circumferential groove, in which a lock ring is mounted, the helical spring being clamped between the lock ring and the abutment of the bore. This embodiment facilitates, in combination with the above-mentioned components mounted on the motor shaft, the mounting operation most considerably.

In one application of the invention, the hub of the brake disc is cylindrical and has externally circumferential keyways for guiding a driving belt, which constitutes a part of the unit driven by the motor. The driving belt is used for driving e.g. a cutting unit, the cutting unit pulley intended for the driving belt suitably having a greater diameter than the hub of the brake disc so as to accomplish a gear change which permits the use of an electric motor which is smaller but has a higher speed, and reduces the load to which the braking system is subjected.

According to a preferred embodiment of the invention, the stationary brake element comprises a plurality of brake blocks, and a plurality of recesses are formed in the bearing plate of the motor, in which recesses the brake blocks are mounted. The advantages of this embodiment are obvious.

The invention will now be described in more detail with reference to the accompanying drawings, in which:
Fig. 1 is an exploded view of an electric motor with its associated braking system and driving belt;
Fig. 2 is a sectional view of a braking system in its neutral position; and
Fig. 3 is a corresponding sectional view of the braking system in its braking position.

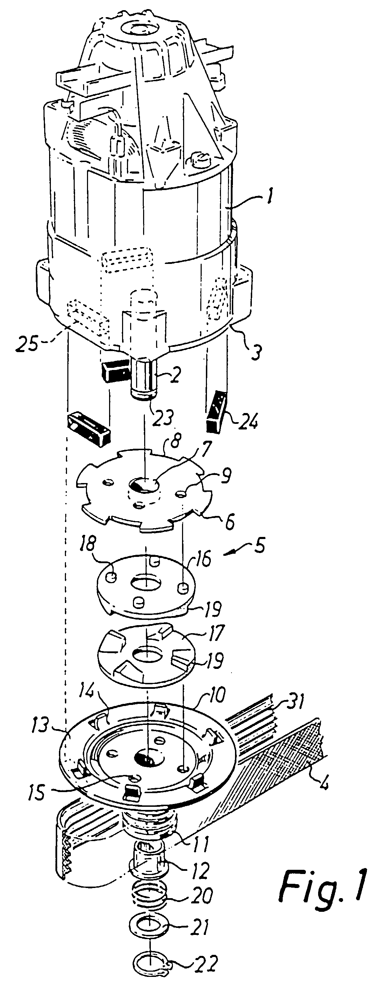

Fig. 1 illustrates an electric motor 1, which has a motor shaft 2 projecting through a bearing plate 3 of the motor 1 in order to drive, via a driving belt 4, a cutting unit (not shown) of a lawn mower.

In order to immediately stop the cutting unit of the lawn mower when switching off the electric motor 1, i.e. when the motor shaft 2 ceases to drive, an inventive braking system, designated 5 in its entirety, is connected between the motor 1 and the driving belt 4.

The braking system 1 comprises a plate-shaped, substantially circular driver 6, which is made of metal sheet and has a central hub 7 for non-rotatable mounting of the driver 6 on the motor shaft 2. The driver 6 has, along its circumference, six uniformly distributed recesses 8, each extending over about 1/12 of the circumference of the driver 6. The driver also has four punched apertures 9, which are uniformly distributed around the central hub 7 of the driver 6.

The braking system 5 also comprises a brake disc 10, which is also plate-shaped and substantially circular. The brake disc 10, which is made of metal sheet, has a central hub 11, which is adapted to be mounted on the motor shaft 2 in an axially and rotatably displaceable manner by means of a bush 12. The brake disc 10 has, along its circumference, a flat braking surface 13, in which six projections 14 have been punched. The projections 14 are intended to engage, with play, with the recesses 8 of the driver 6 and extend in the circumferential direction over a smaller portion of the circumference of the driver 6 (about 1/24). Between the flat braking surface 13 and the central hub 11, the brake disc 10 has apertures 15 corresponding to the apertures 9 in the driver 6.

Two rings 16, 17 of plastic are arranged between the driver 6 and the brake disc 10. The rings 16, 17 are identical and have on their one side four pins 18, which are adapted to engage with the apertures 9 and 15 of the driver 6 and the brake disc 10, and have on their opposite side 4 ramp surfaces 19, which are symmetrically arranged along the circumference of the rings 16, 17.

The braking system 5 also comprises a helical spring 20, which is adapted to urge the brake disc 10 in the direction of the electric motor 1 and to hold, by means of a washer 21 and a lock ring 22 which is inserted in a groove 23 at the free end of the motor shaft 2, the bush 12, the brake disc 10 and the rings 16, 17 in place on the motor shaft 2. Finally, the braking system 5 comprises three brake blocks 24, which are fixedly mounted in suitable recesses 25 in the bearing plate 3 of the motor and are adapted to brake, in cooperation with the braking surface 13 of the brake disc 10, said cutting unit when the motor shaft 2 of the motor 1 ceases to drive.

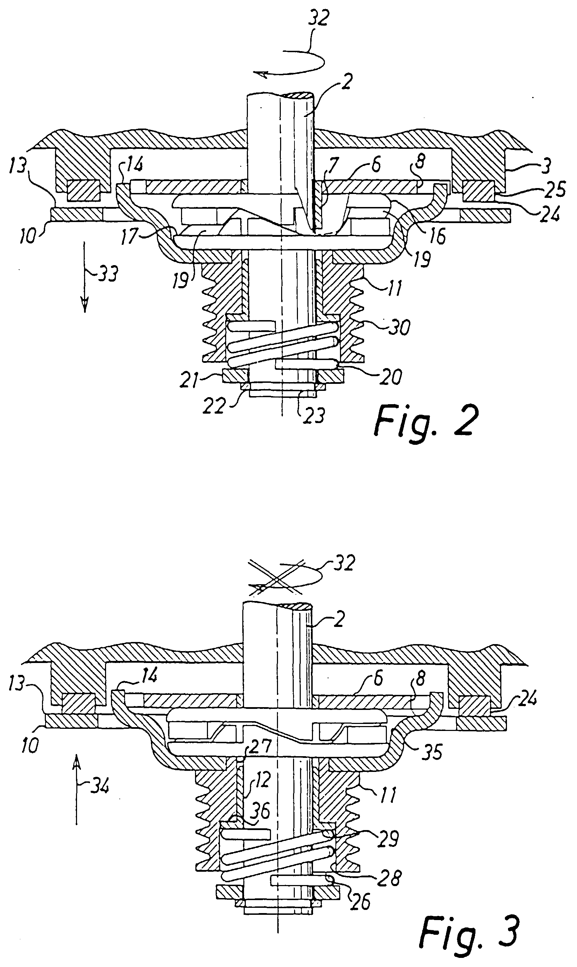

Some further components of the braking system and the function thereof will be described in more detail below with reference to the Figs 2 and 3.

Figs 2 and 3 illustrate some components more clearly than in the exploded view in Fig. 1. One of these components is the hub 11 of the brake disc 10. As appears, the hub 11 has an axial abutment bore 26 with a narrow portion 27 and a wide portion 28. In the narrow portion 27, the bush 12 is inserted, a circumferential collar 29 of which rests against the abutment 36 of the bore 28. In the wide portion 28, the helical spring 20 is accommodated, one end of the spring 20 resting against the washer 21 and the other end against the collar 29 of the bush 12.

It also appears clearly from Figs 2 and 3 that the hub 11 of the brake disc 10 has externally circumferential keyways 30 for engaging with corresponding portions 31 (Fig. 1) of the driving belt 4. The hub 11 thus serves as pulley for driving the cutting unit.

Fig. 2 illustrates the braking system 5 in its neutral position when the electric motor 1 drives the motor shaft 2. This condition is illustrated by means of the arrow 32, which also indicates the direction of rotation. When the motor shaft 2 drives in the direction 32, the ramp surfaces 19 of the rings 16, 17 climb on each other and the brake disc 10 is urged in the direction of arrow 33 away from the brake blocks 24. Thus, the motor shaft 2 can rotate freely and via the driving belt 4 drive the cutting unit unimpededly.

Fig. 3 shows the braking system 5 in its braking position when the braking surface 13 of the brake disc 10 abuts against the brake blocks 24. In the braking position, the motor 1 has ceased to drive its motor shaft 2, which is illustrated in Fig. 3 by the arrow 32 being crossed out. In this position, the brake disc 10 is urged by the helical spring 20 upwards in the direction of arrow 34 towards the motor, and the ramp surfaces 19 of the rings 16, 17 slide down over each other.

One condition for the braking system 5 to take its two different positions is the play that exists between the recesses 8 of the driving driver 6 and the projections 14 of the driven brake disc 10. A further condition is, of course, that the projections remain in the recesses 8 also when the brake disc 10 is displaced from the electric motor 1. In order that the projections 14, despite this requirement, should not be too long, the two rings 16, 17 are suitably accommodated in a depressed central portion 35 in the brake disc 10, which is to be clearly seen from the sectional views in Figs 2 and 3. It also appears from Figs 2 and 3 that the helical spring 20 is well protected inside the hub 11 of the brake disc 10 when the braking system 5 takes its neutral position and the cutting unit of the lawn mower thus operates and throws dust and the like into the air.

It will be appreciated that the embodiment described can be varied in different ways within the scope of the claims, and that both the driver 6 and the brake disc 10, which in the embodiment illustrated are sheet-metal constructions, can also be constructions of some other kind, such as components turned in a lathe.

## Claims

1. A braking system for an electric motor (1), which is adapted to drive, in a given direction of rotation (32), a rotatable motor shaft (2), which projects through a bearing plate (3) of the motor (1) in order to drive a unit, such as a cutting unit in a lawn mower, said system comprising a stationary brake element (24), which is non-rotatable relative to the bearing plate (3), a rotatable brake element (10), which is rotatably and displaceably mounted on the motor shaft (2), a driver (6) which is non-rotatably mounted on the motor shaft (2) between the bearing plate (3) and the rotatable brake element (10) for driving thereof, a resilient means (20), which is adapted to axially urge the rotatable brake element (10) towards the stationary brake element (24), a first ramp means (16), which is fixedly mounted on the driver (6) on the side facing the rotatable brake element (10), a second ramp means (17), which is fixedly mounted on the rotatable brake element (10) on the side facing the driver (6), the two ramp means (16, 17) being adapted to axially urge, when the electric motor (1) drives the motor shaft (2) in said direction of rotation (32), the rotatable brake element (10) in a direction (33) away from the stationary brake element (24), and a unit part (4), which is adapted to be driven by the motor shaft (2) via the driver (6) and the rotatable brake element (10), **characterised** in that the driver (6) is a substantially circular disc, which has a central hub (7) attached to the motor shaft (2), and a plurality of recesses (8) distributed along the circumference of the disc and each extending over a certain part of the circumference, that the stationary brake element (24) projects radially outside the disc, and that the rotatable brake element (10) is a substantially circular brake disc, which has a central hub (11) surrounding the motor shaft (2) and has, for the purpose of being driven by means of the recesses (8) of the driving disc (6), a plurality of projections (14), which project axially towards the driving disc (6) and which extend over a smaller distance in the circumferential direction than the recesses (8) of the driving disc (6), the projections (14) engaging with the recesses (8) with play, the resilient means (20) being adapted to urge, when the electric motor (1) ceases to drive the motor shaft (2) in said direction of rotation (32), the brake disc (10) axially in the direction (34) of the stationary brake element (24) for braking the unit.

2. The braking system as claimed in claim 1, **characterised** in that the driving disc (6) and the brake disc (10) are made of metal sheet, and that the recesses (8) and the projections (14) are made by punching the metal sheet.

3. The braking system as claimed in claim 1 or 2, **characterised** in that at least one of the ramp means (16, 17) is a ring made of plastic, which on its one side has pins (18) for engaging with corresponding apertures (9, 15) in the driving disc (6) and the brake disc (10), respectively, and on its other side has uniformly distributed ramp surfaces (19).

4. The braking system as claimed in any one of claims 1-3, **characterised** in that the resilient means (20) is a helical spring, which encloses the motor shaft (2), and that the hub (11) of the brake disc (10) has an axial abutment bore (26) with a narrow portion (27) for the motor shaft (2) and a wide portion (28) for the helical spring.

5. The braking system as claimed in claim 4, **characterised** in that a tubular bush (12) is arranged between the motor shaft (2) and the narrow portion (27) of the bore (26), the bush (12) having a radially projecting collar (29), which is arranged between the helical spring (20) and the abutment (36) of the bore (26).

6. The braking system as claimed in claim 4 or 5, **characterised** in that at its free end the motor shaft (2) has a circumferential groove (23), in which a lock ring (22) is mounted, the helical spring (20) being clamped between the lock ring (22) and the abutment (36) of the bore (26).

7. The braking system as claimed in any one of claims 1-6, **characterised** in that the hub (11) of the brake disc (10) is cylindrical, and that it has externally circumferential keyways (30) for guiding a driving belt (4), which constitutes a part of the unit driven by the motor (1).

8. The braking system as claimed in any one of claims 1-7, **characterised** in that the stationary brake element (24) comprises a plurality of brake blocks, and that a plurality of recesses (25) are formed in the bearing plate (3) of the motor (1), in which recesses (25) the brake blocks are mounted.

## Patentansprüche

1. Bremssystem für einen Elektromotor (1), der vorgesehen ist in eine bestimmte Umdrehungsrichtung (32) eine drehbare Motorwelle anzutreiben, die durch einen Lagerdeckel (3) ragt um ein Aggregat, wie das Schneidaggregat eines Rasenmähers, anzutreiben, wobei das System ein stationäres Bremsorgan (24), das relativ dem Lagerdeckel (3) drehfest ist, ein drehbares Bremsorgan (10), das dreh- und verschiebbar auf der Motorwelle (2) angebracht ist, ein Mitnehmerorgan (6), das drehfest auf der Motorwelle (2) angebracht ist zwischen dem Lagerdeckel (3) und dem drehbaren Bremsorgan (10) um dieses mitzunehmen, ein Federorgan (20), das vorgesehen ist das drehbare Bremsorgan (10) axial gegen das stationäre Bremsorgan (24) zu verschieben, ein erstes Rampenorgan (16), das fest auf dem Mitnehmerorgan (6) auf der zum drehbaren Bremsorgan (10) gewendeten Seite angebracht ist, ein zweites Rampenorgan (17), das fest auf dem drehbaren Bremsorgan (10) auf der zum Mitnehmerorgan (6) gewendeten Seite angebracht ist, wobei die beiden Rampenorgane (16, 17) vorgesehen sind das drehbare Bremsorgan (10), wenn der Elektromotor (1) die Motorwelle (2) in der genannten Drehrichtung (32) antreibt, axial in Richtung (33) weg von dem stationären Bremsorgan (24) zu verschieben, und ein Aggregatteil (4), das vorgesehen ist über das Mitnehmerorgan (6) und das drehbare Bremsorgan(10) von der Motorwelle (2) angetrieben zu werden, umfasst, **dadurch gekennzeichnet**, dass das Mitnehmerorgan (6) eine im Wesentlichen kreisförmige Scheibe ist, die eine zentrale, auf der Motorwelle (2) befestigte Nabe (7) und eine Vielzahl entlang dem Umfang der Scheibe verteilte Einschnitte (8) aufweist, die sich jeweils über einen bestimmten Teil des Umfangs erstrecken, dass das stationäre Bremsorgan (24) sich radial über die Scheibe hinaus erstreckt, und dass das drehbare Bremsorgan (10) eine im Wesentlichen kreisförmige Bremsscheibe ist, die eine zentrale, die Motorwelle (2) umgebende Nabe (11) aufweist und die, um mit Hilfe der Einschnitte (8) der Mitnehmerscheibe (6) angetrieben zu werden, eine Vielzahl axial in Richtung der Mitnehmerscheibe (6) herausragende Vorsprünge (14) hat, die sich jeweils in der Umfangsrichtung über eine kürzere Strecke ausdehnen als die Einschnitte (8) der Mitnehmerscheibe (6), mit denen sie mit Spiel eingreifen, wobei das Federorgan (20), wenn der Elektromotor (1) aufhört die Motorwelle (2) in die genannte Richtung (34) anzutreiben, vorgesehen ist die Bremsscheibe (10) in axialer Richtung (34) gegen das stationäre Bremsorgan (24) zu pressen um das Aggregat zu bremsen.

2. Bremssystem gemäss Anspruch 1, **dadurch gekennzeichnet**, dass die Mitnehmerscheibe (6) und die Bremsscheibe (10) aus Blech hergestellt sind und dass die Einschnitte (8) beziehungsweise die Vorsprünge (14) aus dem Blech ausgestanzt sind.

3. Bremssystem gemäss Anspruch 1 oder 2, **dadurch gekennzeichnet**, dass zumindest eines der Rampenorgane (16, 17) ein aus Kunststoff hergestellter Ring ist, der auf seiner einen Seite Zapfen (18) hat zum Eingriff mit entsprechenden Löchern (9, 15) in der Mitnehmerscheibe (6) beziehungsweise der Bremsscheibe (10) und auf seiner anderen Seite gleichmäsig verteilte Rampenflächen (19) hat.

4. Bremssystem gemäss einem der Ansprüche 1-3, **dadurch gekennzeichnet**, dass das Federorgan (20) eine Schraubenfeder ist, welche die Motorwelle (2) umgibt, und dass die Nabe (11) der Bremsscheibe (10) eine axiale Stufenbohrung (26) hat mit einem engen Abschnitt (27) für die Motorwelle (2) und mit einem weiten Abschnitt (28) für die Schraubenfeder.

5. Bremssystem gemäss Anspruch 4, **dadurch gekennzeichnet**, dass eine rohrförmige Buchse (12) zwischen der Motorwelle (2) und dem engeren Abschnitt (27) der Bohrung (26) angebracht ist, wobei die Buchse (12) einen radial hervorragenden Kragen (29) hat, der zwischen der Schraubenfeder (20) und der Stufe (36) der Bohrung (26) angebracht ist.

6. Bremssystem gemäss Anspruch 4 oder 5, **dadurch gekennzeichnet**, dass die Motorwelle (2) an ihrem freien Ende eine umgehende Nut (23) hat, in der ein Schliessring (22) angebracht ist, wobei die Schraubenfeder (20) zwischen dem Schliessring (22) und der Stufe (36) der Bohrung (26) eingespannt ist.

7. Bremssystem gemäss einem der Ansprüche 1-6, **dadurch gekennzeichnet**, dass die Nabe (11) der Bremsscheibe (10) zylindrisch ist und dass sie aussen umgehende Keilnuten (30) zur Führung eines Antriebriemens (4) hat, der ein Teil des vom Motor (1) angetriebenen Aggregats ausmacht.

8. Bremssystem gemäss einem der Ansprüche 1-7, **dadurch gekennzeichnet**, dass das stationäre Bremsorgan (24) eine Vielzahl Bremsklötze umfasst und dass im Lagerdeckel (3) des Motors (1) eine Vielzahl Ausnehmungen (25) vorgesehen sind, in denen die Bremsklötze angebracht sind.

## Revendications

1. Système de freinage destiné à un moteur électrique (1), destiné à entraîner, dans un sens déterminé de rotation (32), un arbre rotatif (2) de moteur qui dépasse en traversant une plaque de palier (3) du moteur (1) pour entraîner une unité, par exemple une unité de coupe d'une tondeuse à gazon, le système comprenant un élément stationnaire (24) de frein qui ne peut pas tourner par rapport à la plaque de palier (3), un élément rotatif (10) de frein qui est monté sur l'arbre (2) du moteur afin qu'il puisse tourner et se déplacer, un organe d'entraînement (6) qui est monté afin qu'il ne puisse pas tourner sur l'arbre (2) du moteur, entre la plaque de palier (3) et l'élément rotatif (10) de frein pour l'entraînement de celui-ci, un dispositif élastique (20) destiné à repousser axialement l'élément rotatif (10) de frein vers l'élément stationnaire (24) de frein, un premier dispositif (16) à rampe monté de manière fixe sur l'organe d'entraînement (6) du côté tourné vers l'élément rotatif (10) de frein, un second dispositif (17) à rampe monté de manière fixe sur l'élément rotatif (10) de frein du côté tourné vers l'organe d'entraînement (6), les deux dispositifs (16, 17) à rampe étant destiné, lorsque le moteur électrique (1) entraîne l'arbre (2) du moteur dans le sens déterminé de rotation (32), à repousser axialement l'élément rotatif (10) de frein dans le sans (33) qui l'écarte de l'élément stationnaire (24) de frein, et une partie de l'unité (4) destinée à être entraînée par l'arbre (2) du moteur par l'intermédiaire de l'organe d'entraînement (6) et de l'élément rotatif (10) de frein, caractérisé en ce que l'organe d'entraînement (6) est un disque pratiquement circulaire ayant un moyeu central (7) fixé à l'arbre (2) du moteur et plusieurs cavités (8) réparties à la circonférence du disque et s'étendant chacune sur une certaine partie de la circonférence, en ce que l'élément stationnaire (24) de frein dépasse radialement vers l'extérieur du disque, et en ce que l'élément rotatif (10) de frein est un disque pratiquement circulaire de frein qui a un moyeu central (11) entourant l'arbre (2) du moteur et qui, pour être entraîné par les cavités (8) du disque d'entraînement (6), possède plusieurs saillies (14) qui dépassent axialement vers le disque d'entraînement (6) et s'étendent, en direction circonférentielle sur une distance inférieure à celle sur laquelle s'étendent les cavités (8) du disque d'entraînement (6), les saillies (14) pénétrant dans les cavités (8) avec du jeu, le dispositif élastique (20) étant destiné, lorsque le moteur électrique (1) cesse d'entraîner l'arbre (2) du moteur dans le sens déterminé de rotation (32), à pousser le disque (10) de frein axialement dans la direction (34) de l'élément fixe (24) de frein afin que l'unité soit freinée.

2. Système de freinage selon la revendication 1, caractérisé en ce que le disque d'entraînement (6) et la disque de frein (10) sont formés d'une feuille métallique, et en ce que les cavités (8) et les saillies (14) sont formées par poinçonnage de la feuille métallique.

3. Système de freinage selon la revendication 1 ou 2, caractérisé en ce que l'un au moins des dispositifs à rampe (16, 17) est un anneau formé de matière plastique et qui, d'un premier côté, a des broches (18) destinées à pénétrer dans des orifices correspondants (9, 15) formés dans le disque d'entraînement (6) et le disque de freinage (10) respectivement et, de l'autre côté, a des surfaces de rampe (19) réparties uniformément.

4. Système de freinage selon l'une quelconque des revendications 1 à 3, caractérisé en ce que le dispositif élastique (20) est un ressort hélicoïdal qui entoure l'arbre (2) du moteur, et en ce quo le moyeu (11) du disque (10) de frein a un trou axial (26) à butée ayant une partie étroite (27) destinée à l'arbre (2) du moteur et une partie large (28) destinée au ressort hélicoïdal.

5. Système de freinage selon la revendication 4, caractérisé en ce qu'un manchon tubulaire (12) est placé entre l'arbre (2) du moteur et la partie étroite (27) du trou (26), le manchon (12) ayant un collier (29) qui dépasse radialement et qui est placé entre le ressort hélicoïdal (20) et la butée (36) du trou (26).

6. Système de freinage selon la revendication 4 ou 5, caractérisé en ce que, à son extrémité libre, l'arbre (2) du moteur a une gorge circonférentielle (23) dans laquelle est monté un anneau de blocage (22), le ressort hélicoïdal (20) étant serré entre l'anneau de blocage (22) et la butée (36) du trou (26).

7. Système de freinage selon l'une quelconque des revendications 1 à 6, caractérisé en ce que le moyeu (11) du disque (10) de frein est cylindrique, et en ce qu'il possède des rainures circonférentielles externes (30) destinées à guider une courroie (4) de transmission qui fait partie de l'unité entraînée par le moteur (1).

8. Système de freinage selon l'une quelconque des revendications 1 à 7, caractérisé en ce que l'élément stationnaire (24) de frein comporte plusieurs blocs de frein, et en ce que plusieurs cavités (25) sont formées dans la plaque de palier (3) du moteur (1), les blocs de frein étant montés dans ces cavités (25).
